# EUROPEAN PATENT APPLICATION

(11) **EP 4 775 618 A1**
(43) Date of publication of application: **15.07.2026**
(21) Application number: 23955312.6
(22) Date of filing: 04.12.2023
(51) Int. Cl.: C08J 3/075, C08B 37/08, C08L 5/08

(54) **SINGLE-PHASE ROOM-TEMPERATURE INJECTABLE THERMOSENSITIVE CHITOSAN HYDROGEL AND PREPARATION METHOD THEREFOR**

(30) Priority: 09.10.2023 CN 202311296778
(71) Applicant: Shanghai Qisheng Biological Preparation Co., Ltd., Shanghai 201106 (CN)
(72) Inventor: WEI, Changzheng, Shanghai 201106 (CN); XI, Hongwei, Shanghai 201106 (CN); JIANG, Fang, Shanghai 201106 (CN); WANG, Xiaotong, Shanghai 201106 (CN); WU, Jianying, Shanghai 201106 (CN); ZHANG, Long, Shanghai 201106 (CN); JIANG, Lixia, Shanghai 201106 (CN)
(74) Representative: Bayramoglu et al.
(86) International application number: PCT/CN2023/136036
(87) International publication number: WO 2025/076955

(57) **Abstract**

The present disclosure relates to the technical field of chitosan modification, and specifically to a single-phase thermosensitive chitosan hydrogel injectable at room temperature and a preparation method thereof. The preparation method includes the following steps: grinding a dry chitosan powder to produce a fine chitosan powder with a particle size of less than or equal to 2,500 mesh; subjecting the fine chitosan powder to alkalization, and filtering to produce a wet chitosan powder; subjecting the wet chitosan powder and an alkylene oxide compound directly to an etherification reaction under stirring and ultrasonic conditions, collecting a reaction product, and subjecting the reaction product to alcohol washing multiple times and suction filtration to produce a thermosensitive wet chitosan material; and subjecting the thermosensitive wet chitosan material to re-dissolution, dialysis, filling, and sterilization successively to produce the thermosensitive chitosan hydrogel with a total degree of substitution of 0.6 to 2. The thermosensitive chitosan hydrogel of the present disclosure has a low total degree of substitution and a high degree of substitution at C2 amino. The thermosensitive chitosan hydrogel remains a homogeneous liquid at a temperature lower than a gelation temperature, does not undergo phase separation even after high-temperature high-pressure sterilization, and can still maintain the homogeneous liquid after undergoing the high-temperature high-pressure sterilization and returning to room temperature. The thermosensitive chitosan hydrogel has high stability and a wide operating temperature range, and can be easily injected at room temperature.

## Description

### TECHNICAL FIELD

The present disclosure relates to the technical field of chitosan modification, and specifically to a single-phase thermosensitive chitosan hydrogel injectable at room temperature and a preparation method thereof.

### BACKGROUND TECHNOLOGY

Pharmaceutical excipients must be safe, non-toxic, and highly biocompatible. As a natural polysaccharide, chitosan is highly favored. Chitosan is mostly produced through chemical treatment of crustaceans (such as shrimp shells and crab shells). Chitosan, which is currently the only natural alkaline polysaccharide, is an eco-friendly, renewable natural polymer material. Chitosan itself is weakly alkaline. Consequently, chitosan is insoluble in water or alkaline solutions and can only be dissolved in acidic solutions. This greatly limits the application of chitosan in the pharmaceutical industry. To improve the solubility and other properties of chitosan, chemical modifications are required to the structure of chitosan. There are numerous hydroxyl groups, amino groups, and glycosidic bonds in the molecular structure of chitosan, and the glycosidic bonds are relatively stable and not easily modified. As a result, current chemical modifications for chitosan mainly focus on hydroxyl groups and amino groups.

The molecular structure of chitosan is as follows:

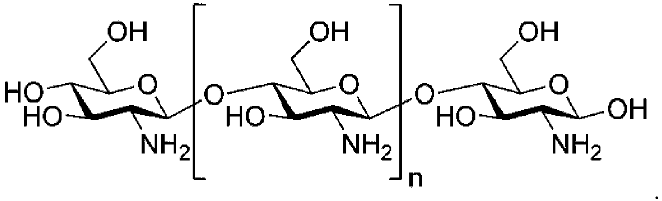

The molecular structure of chitosan includes a large number of amino groups and hydroxyl groups, with amino groups at the C2 position and hydroxyl groups at the C3 and C6 positions (hydroxyl groups at the C6 position are more reactive than hydroxyl groups at the C3 position). These two active groups are prone to the following reactions: acylation, hydroxylation, etherification, alkylation, esterification, hydrolysis, grafting, crosslinking, etc., all of which involve varying degrees of substitution. Therefore, modified chitosan can exist in a variety of configurations.

In the prior art, for example, Chinese Patent CN101284884B discloses a method for preparing a thermosensitive chitosan derivative-hydroxybutyl chitosan. The method includes the following steps: A raw material is treated with an acid, an alkali, or a high temperature to produce chitosan with a degree of deacetylation of 85% to 95%. The chitosan is then reacted with an alkali at 70°C to 80°C to produce a crude chitosan product. The crude chitosan product is dissolved in an acid and subjected to alkali precipitation, alcohol dehydration, washing, etc. to produce purified chitosan. Then, the purified chitosan is subjected to alkalization and room-temperature hydroxybutylation successively to produce a white powder, which is the thermosensitive chitosan derivative-hydroxybutyl chitosan. The reaction conditions, such as a ratio of chitosan to 1,2-epoxybutane and a reaction time, are controlled to produce the hydroxybutyl chitosan. Among the products in the embodiments of this patent, some are completely soluble and some are partially soluble. However, FIG. 4 of this patent records a gelation temperature of 25°C or lower. When a temperature exceeds room temperature, the product undergoes phase separation. Due to poor stability at room temperature, the product is prone to failure and difficult to extrude for injection and exhibits unsatisfactory biocompatibility.

In order to improve the solubility to enable injectability, the same applicant discloses a method for preparing a low-swelling thermosensitive injectable chitosan-based hydrogel in Chinese patent CN114656652A. In this method, the hydroxybutyl chitosan, as a raw material, is subjected to a charge modification (with a modifying compound such as an anhydride) such that a product has controllable low swelling properties, water solubility, and injectability. However, the hydrogel of this patent has a relatively low gelation temperature of 15°C to 17°C. Compared with the hydrogel of the Chinese patent CN101284884B, the hydrogel of the Chinese patent CN114656652A is highly prone to phase separation and precipitation at room temperatures of 23°C to 25°C, causing difficulty in extrusion for injection. Once the precipitation occurs, the product becomes ineffective. However, it still fails to solve the problems of poor stability and susceptibility to failure. Both of the two hydrogels exhibit poor biocompatibility.

### CONTENT OF THE INVENTION

In order to solve the technical problems of existing chitosan hydrogels, including poor room-temperature stability caused by susceptibility to phase separation at room temperature, and poor biocompatibility, a single-phase thermosensitive chitosan hydrogel injectable at room temperature and a preparation method thereof are provided. The thermosensitive chitosan hydrogel of the present disclosure has a low total degree of substitution and a high degree of substitution at C2 amino. The thermosensitive chitosan hydrogel remains a homogeneous liquid at a temperature lower than a gelation temperature and does not undergo phase separation even after high-temperature high-pressure sterilization. Moreover, after undergoing the high-temperature high-pressure sterilization and returning to room temperature, the thermosensitive chitosan hydrogel can still maintain the homogeneous liquid. The thermosensitive chitosan hydrogel of the present disclosure has high stability and a wide operating temperature range, and can be easily injected at room temperature.

To achieve the above objective, the present disclosure is achieved through the following technical solutions:
A preparation method of a single-phase thermosensitive chitosan hydrogel injectable at room temperature is provided, including the following steps:
(1) grinding a dry chitosan powder to produce a fine chitosan powder with a particle size of less than or equal to 2,500 mesh, where the dry chitosan powder has a degree of deacetylation of 80% or more and a weight-average molecular weight of 300,000 Daltons or more;
(2) subjecting the fine chitosan powder to alkalization, and filtering an alkalized material to produce a wet chitosan powder;
(3) subjecting the wet chitosan powder and an alkylene oxide compound to an etherification reaction for 24 h to 72 h at 27°C to 50°C under stirring and ultrasonic conditions, collecting a reaction product, and subjecting the reaction product to alcohol washing multiple times and suction filtration to produce a thermosensitive wet chitosan material; and
(4) subjecting the thermosensitive wet chitosan material to re-dissolution, dialysis, filling, and sterilization successively to produce the thermosensitive chitosan hydrogel with a total degree of substitution of 0.6 to 2, where a degree of substitution at C6 hydroxyl is 0.5 to 1.0, a degree of substitution at C3 hydroxyl is 0 to 0.5, and a degree of substitution at C2 amino is 0.1 to 0.5.

Further, a process for preparing the dry chitosan powder is as follows: thoroughly mixing chitin with an alkaline solution, and conducting a microwave reaction; repeatedly washing a product obtained after the microwave reaction to produce a wet material; and oven-drying the wet material to produce the dry chitosan powder; and a process for preparing the fine chitosan powder is as follows: grinding the dry chitosan powder using an ultrafine powder grinder for at least 15 min until a particle size is less than or equal to 2,500 mesh.

Preferably, the microwave reaction is conducted for 1 min to 8 min at a power of 500 W to 900 W; and the process for preparing the dry chitosan powder further includes repeating the following steps once to 6 times: thoroughly mixing the wet material with the alkaline solution, conducting the microwave reaction, and repeatedly washing.

Preferably, the alkaline solution is a 30 wt% to 70 wt% aqueous sodium hydroxide solution; a mass-to-volume ratio of the chitin to the alkaline solution is 1 g : 5 mL to 1 g : 20 mL; and the repeatedly washing refers to washing multiple times with ethanol and pure water.

Preferably, the dry chitosan powder has a degree of deacetylation of 85% to 99% and a weight-average molecular weight of 300,000 Daltons to 800,000 Daltons.

Further, in the step (2), the alkalization is conducted as follows: adding the fine chitosan powder to a 30 wt% to 70 wt% aqueous potassium hydroxide solution, and standing in a water bath at 15°C to 35°C for 1 d to allow the alkalization, where a mass-to-volume ratio of the fine chitosan powder to the aqueous potassium hydroxide solution is 1 g : 5 mL to 1 g : 30 mL.

Further, in the step (3), the alkylene oxide compound is selected from one of 1,2-epoxypropane, 1,2-epoxybutane, 1,2-epoxypentane, and 1,2-epoxyhexane.

Further, in the step (3), the etherification reaction is conducted at an ultrasonic frequency of 30 kHz and an ultrasonic power of 500 W with pure water as a solvent; and a mass-to-volume ratio of the fine chitosan powder to the alkylene oxide compound is 1 g : 20 mL to 1 g : 50 mL and a mass-to-volume ratio of the fine chitosan powder to the pure water is 1 g : 1 mL to 1 : 10 mL.

Further, in the step (4), the re-dissolution is conducted as follows: adding pure water to the thermosensitive wet chitosan material, and stirring for dissolution to produce a colorless and clear thermosensitive chitosan solution;
the dialysis is conducted using phosphate buffered saline (PBS) with an osmotic pressure of 250 mOsm/L to 350 mOsm/L and a pH of 7.2±0.2 for 48 h to 144 h, during which the PBS is replaced every 24 h; and
the sterilization is conducted using a pressure steam sterilizer at a pressure of 0.1 MPa to 0.15 MPa and a temperature of 121°C to 122°C for 10 min to 15 min until a sterilization factor F₀ is larger than or equal to 12.0.

Another aspect of the present disclosure provides a thermosensitive chitosan hydrogel injectable at room temperature prepared by the preparation method described above, where the thermosensitive chitosan hydrogel does not undergo phase separation and has a low total degree of substitution, and a concentration of the thermosensitive chitosan hydrogel is 6 mg/mL to 20 mg/mL.

### Beneficial technical effects:

In the present disclosure, a dry chitosan powder with a high degree of deacetylation and a large molecular weight is first subjected to a refining treatment until a particle size is less than or equal to 2,500 mesh. After the particle size refinement, a specific surface area increases, and accordingly, the subsequent alkalization can be complete. With the large specific surface area, the chitosan powder can undergo a full etherification reaction with the alkylene oxide compound under stirring and ultrasonic conditions, which reduces the number of exposed amino groups at the C2 position and thus leads to a hydrogel with improved biocompatibility. The thermosensitive chitosan hydrogel obtained by the present disclosure has a low total degree of substitution and a high degree of substitution at C2 amino, is injectable at room temperature, and does not experience phase separation after high-temperature sterilization.
The hydrogel of the present disclosure has a gelation temperature of 29°C to 40°C, and remains a homogeneous liquid at a temperature lower than the gelation temperature. Even when a temperature exceeds the gelation temperature, the hydrogel experiences no phase separation. The hydrogel does not undergo phase separation even after high-temperature high-pressure sterilization. Moreover, after undergoing the high-temperature high-pressure sterilization and returning to room temperature, the hydrogel can still maintain the homogeneous liquid. The thermosensitive chitosan hydrogel of the present disclosure has high stability and a wide operating temperature range, and can be easily injected at room temperature.

### DESCRIPTION OF THE DRAWINGS

FIG. 1 shows the appearance of a thermosensitive chitosan hydrogel prepared in Comparative Example 1 at 43°C;
FIG. 2 shows the morphologies of a thermosensitive chitosan hydrogel prepared in Example 2 under different conditions;
FIG. 3 shows the curves illustrating changes of moduli of the thermosensitive chitosan hydrogel prepared in Example 2 as a function of temperature; and
FIG. 4 shows the skin conditions after intradermal injection of thermosensitive chitosan hydrogels of Examples 1 to 4 and hydrogels of Comparative Examples 2 to 5.

### SPECIFIC IMPLEMENTATIONS

The technical solutions in the embodiments of the present disclosure will be clearly and completely described below with reference to the embodiments and the accompanying drawings of the present disclosure. Obviously, the described embodiments are merely some rather than all of the embodiments of the present disclosure. The following description of at least one exemplary embodiment is merely illustrative, and is not intended to limit the present disclosure and application or use thereof in any way. All other embodiments obtained by a person of ordinary skill in the art based on the embodiments of the present disclosure without creative efforts shall fall within the scope of protection of the present disclosure.

Unless otherwise specified, the numerical values set forth in these embodiments do not limit the scope of the present disclosure. The techniques and methods known to those of ordinary skill in the relevant arts may not be discussed in detail, but where appropriate, the techniques and methods should be regarded as a part of the description. In all examples shown and discussed herein, any specific value should be interpreted as merely exemplary, rather than restrictive. Therefore, other examples of the exemplary embodiments may have different values.

In the following embodiments, in experimental methods for which specific conditions are not indicated, measurements are generally carried out in accordance with national standards. If there are no corresponding national standards, the measurements are carried out in accordance with general international standards or standard requirements proposed by relevant enterprises.

### Example 1

A preparation method of a single-phase thermosensitive chitosan hydrogel injectable at room temperature was provided, including the following steps:
(1) 100 g of chitin and 500 mL of a 30 wt% aqueous NaOH solution were thoroughly mixed, then subjected to a microwave reaction at a power of 500 W for 1 min to allow deacetylation, and subjected to repeated washing with absolute ethanol and pure water to produce a wet material. The following process was repeated once: The wet material and the aqueous NaOH solution were mixed and subjected to the microwave reaction and the repeated washing under the same process parameters as above. The microwave reaction was conducted multiple times to guarantee a high degree of deacetylation. A final product was oven-dried to produce a dry chitosan powder with a weight-average molecular weight of approximately 800,000 Daltons and a degree of deacetylation of 80%.
   The dry chitosan powder was ground using an ultrafine powder grinder for at least 15 min to produce a fine chitosan powder with a particle size of 2,500 mesh or less.
(2) 30 g of the fine chitosan powder and 150 mL of a 30 wt% aqueous KOH solution were mixed, allowed to stand in a water bath at 15°C for 1 d to allow alkalization, and filtered to produce a wet chitosan powder.
(3) The wet chitosan powder, 150 mL of 1,2-epoxypropane, and 30 mL of pure water were subjected to an etherification reaction at 27°C for 24 h under stirring and ultrasonic conditions. An ultrasonic frequency was 30 kHz and an ultrasonic power was 500 W. A reaction product was collected, washed multiple times with absolute ethanol, and subjected to suction filtration to produce a thermosensitive wet chitosan material.
(4) The thermosensitive wet chitosan material was subjected to re-dissolution, dialysis, filling, and sterilization successively.
The re-dissolution was conducted as follows: Pure water was added to the thermosensitive wet chitosan material, and stirring was conducted for dissolution to produce a colorless and clear thermosensitive chitosan solution.
The colorless and clear thermosensitive chitosan solution was subjected to the dialysis for 48 h using PBS with an osmotic pressure of 300 mOsm/L and a pH of 7.2±0.2, then filled, and sterilized using a pressure steam sterilizer at a pressure of 0.12 MPa and a temperature of 122°C for 15 min until a sterilization factor (F₀) was larger than or equal to 12.0 to finally produce a thermosensitive chitosan hydrogel with a concentration of 8 mg/mL.

According to test results, the thermosensitive chitosan hydrogel had a total degree of substitution of 0.6, where a degree of substitution at C6 hydroxyl was 0.5, a degree of substitution at C3 hydroxyl was 0, and a degree of substitution at C2 amino was 0.1.

### Example 2

A preparation method of a single-phase thermosensitive chitosan hydrogel injectable at room temperature was provided, including the following steps:
(1) 100 g of chitin and 1,000 mL of a 60 wt% aqueous NaOH solution were thoroughly mixed, then subjected to a microwave reaction at a power of 600 W for 2 min to allow deacetylation, and subjected to repeated washing with ethanol and pure water to produce a wet material. The following process was repeated 3 times: The wet material and the aqueous NaOH solution were mixed and subjected to the microwave reaction and the repeated washing under the same process parameters as above. The microwave reaction was conducted multiple times to guarantee a high degree of deacetylation. A final product was oven-dried to produce a dry chitosan powder with a weight-average molecular weight of approximately 500,000 Daltons and a degree of deacetylation of 85%.
   The dry chitosan powder was ground using an ultrafine powder grinder for at least 15 min to produce a fine chitosan powder with a particle size of 2,500 mesh or less.
(2) 30 g of the fine chitosan powder and 300 mL of a 60 wt% aqueous KOH solution were mixed, allowed to stand in a water bath at 20°C for 1 d to allow alkalization, and filtered to produce a wet chitosan powder.
(3) The wet chitosan powder, 600 mL of 1,2-epoxybutane, and 100 mL of pure water were subjected to an ultrasound-assisted etherification reaction at 30°C for 48 h under stirring. An ultrasonic frequency was 30 kHz and an ultrasonic power was 500 W. A reaction product was collected, washed multiple times with absolute ethanol, and subjected to suction filtration to produce a thermosensitive wet chitosan material.
(4) The thermosensitive wet chitosan material was subjected to re-dissolution, dialysis, filling, and sterilization successively.
The re-dissolution was conducted as follows: Pure water was added to the thermosensitive wet chitosan material, and stirring was conducted for dissolution to produce a colorless and clear thermosensitive chitosan solution.
The colorless and clear thermosensitive chitosan solution was subjected to the dialysis for 48 h using PBS with an osmotic pressure of 350 mOsm/L and a pH of 7.2±0.2, then filled, and sterilized using a pressure steam sterilizer at a pressure of 0.12 MPa and a temperature of 122°C for 15 min until a sterilization factor (F₀) was larger than or equal to 12.0 to finally produce a thermosensitive chitosan hydrogel with a concentration of 20 mg/mL.

According to test results, the thermosensitive chitosan hydrogel had a total degree of substitution of 1, where a degree of substitution at C6 hydroxyl was 0.75, a degree of substitution at C3 hydroxyl was 0, and a degree of substitution at C2 amino was 0.25.

### Example 3

A preparation method of a single-phase thermosensitive chitosan hydrogel injectable at room temperature was provided, including the following steps:
(1) 100 g of chitin and 1,500 mL of a 60 wt% aqueous NaOH solution were thoroughly mixed, then subjected to a microwave reaction at a power of 750 W for 5 min to allow deacetylation, and subjected to repeated washing with ethanol and pure water to produce a wet material. The following process was repeated 4 times: The wet material and the aqueous NaOH solution were mixed and subjected to the microwave reaction and the repeated washing under the same process parameters as above. The microwave reaction was conducted multiple times to guarantee a high degree of deacetylation. A final product was oven-dried to produce a dry chitosan powder with a weight-average molecular weight of approximately 600,000 Daltons and a degree of deacetylation of 95%.
   The dry chitosan powder was ground using an ultrafine powder grinder for at least 15 min to produce a fine chitosan powder with a particle size of 2,500 mesh or less.
(2) 30 g of the fine chitosan powder and 600 mL of a 40 wt% aqueous KOH solution were mixed, allowed to stand in a water bath at 30°C for 1 d to allow alkalization, and filtered to produce a wet chitosan powder.
(3) The wet chitosan powder, 1,000 mL of 1,2-epoxypentane, and 150 mL of pure water were subjected to an ultrasound-assisted etherification reaction at 40°C for 48 h under stirring. An ultrasonic frequency was 30 kHz and an ultrasonic power was 500 W. A reaction product was collected, washed multiple times with absolute ethanol, and subjected to suction filtration to produce a thermosensitive wet chitosan material.
(4) The thermosensitive wet chitosan material was subjected to re-dissolution, dialysis, filling, and sterilization successively.
The re-dissolution was conducted as follows: Pure water was added to the thermosensitive wet chitosan material, and stirring was conducted for dissolution to produce a colorless and clear thermosensitive chitosan solution.
The colorless and clear thermosensitive chitosan solution was subjected to the dialysis for 48 h using PBS with an osmotic pressure of 300 mOsm/L and a pH of 7.2±0.2, then filled, and sterilized using a pressure steam sterilizer at a pressure of 0.12 MPa and a temperature of 122°C for 15 min until a sterilization factor (F₀) was larger than or equal to 12.0 to finally produce a thermosensitive chitosan hydrogel with a concentration of 20 mg/mL.

According to test results, the thermosensitive chitosan hydrogel had a total degree of substitution of 1.5, where a degree of substitution at C6 hydroxyl was 1.0, a degree of substitution at C3 hydroxyl was 0.2, and a degree of substitution at C2 amino was 0.3.

### Example 4

A preparation method of a single-phase thermosensitive chitosan hydrogel injectable at room temperature was provided, including the following steps:
(1) 100 g of chitin and 2,000 mL of a 70 wt% aqueous NaOH solution were thoroughly mixed, then subjected to a microwave reaction at a power of 900 W for 8 min to allow deacetylation, and subjected to repeated washing with ethanol and pure water to produce a wet material. The following process was repeated 4 times: The wet material and the aqueous NaOH solution were mixed and subjected to the microwave reaction and the repeated washing under the same process parameters as above. The microwave reaction was conducted multiple times to guarantee a high degree of deacetylation. A final product was oven-dried to produce a dry chitosan powder with a weight-average molecular weight of approximately 300,000 Daltons and a degree of deacetylation of 99%.
   The dry chitosan powder was ground using an ultrafine powder grinder for at least 15 min to produce a fine chitosan powder with a particle size of 2,500 mesh or less.
(2) 30 g of the fine chitosan powder and 900 mL of a 70 wt% aqueous KOH solution were mixed, allowed to stand in a water bath at 35°C for 1 d to allow alkalization, and filtered to produce a wet chitosan powder.
(3) The wet chitosan powder, 1,500 mL of 1,2-epoxyhexane, and 300 mL of pure water were subjected to an ultrasound-assisted etherification reaction at 50°C for 72 h under stirring. An ultrasonic frequency was 30 kHz and an ultrasonic power was 500 W. A reaction product was collected, washed multiple times with absolute ethanol, and subjected to suction filtration to produce a thermosensitive wet chitosan material.
(3) The thermosensitive wet chitosan material was subjected to re-dissolution, dialysis, filling, and sterilization successively.
The re-dissolution was conducted as follows: Pure water was added to the thermosensitive wet chitosan material, and stirring was conducted for dissolution to produce a colorless and clear thermosensitive chitosan solution.
The colorless and clear thermosensitive chitosan solution was subjected to the dialysis for 144 h using PBS with an osmotic pressure of 250 mOsm/L and a pH of 7.2±0.2, then filled, and sterilized using a pressure steam sterilizer at a pressure of 0.15 MPa and a temperature of 121°C for 10 min until a sterilization factor (F₀) was larger than or equal to 12.0 to finally produce a thermosensitive chitosan hydrogel with a concentration of 15 mg/mL.

According to test results, the thermosensitive chitosan hydrogel had a total degree of substitution of 2, where a degree of substitution at C6 hydroxyl was 1.0, a degree of substitution at C3 hydroxyl was 0.5, and a degree of substitution at C2 amino was 0.5.

### Comparative Example 1

The preparation method in Example 4 of Chinese Patent CN101284884B was adopted, specifically including the following steps:
Step 1: Preparation of chitosan: 100 g of fresh shrimp shells were taken, subjected to head, leg, and tail removal, washed with clean water, soaked in 800 mL of 5% hydrochloric acid for decalcification, then soaked in 800 mL of a 10 wt% sodium hydroxide solution to remove impurity proteins, washed with water for injection until a pH was 7 to 8, oven-dried, and ground produce a chitin powder. The chitin powder was subjected to a deacetylation reaction for 24 h in 800 mL of a 50 wt% sodium hydroxide solution at 90°C. A deacetylation product was washed with water for injection until a pH was 7 to 8, dehydrated with a 95 vol% alcohol, and finally vacuum-dried to produce chitosan with a degree of deacetylation of at least 85%.
Step 2: Purification of the chitosan to remove residual proteins and pigments from the chitosan: The chitosan prepared in the step 1 and 800 mL of a 2 wt% sodium hydroxide solution were mixed, stirred at 75°C for 2 h, and subjected to suction filtration. The same process was repeated three times with 800 mL of the 2 wt% sodium hydroxide solution each time. A resulting solid was washed with deionized water until a pH was 7 to 8 and then vacuum-dried at 50°C to produce a crude chitosan product. The crude chitosan product was dissolved in 6,000 mL of a 1.5 wt% acetic acid solution, and filtration was conducted with a 300-mesh silk fabric to remove impurities. A pH was adjusted with a 10 wt% sodium hydroxide solution to 8 to 9 to produce a latex-like precipitate. The latex-like precipitate was separated by solid-liquid separation, washed with deionized water until a pH was 7 to 8, dehydrated with 1,500 mL of 95 vol% ethanol, washed four times with 1,500 mL of 70 vol% ethanol for desalting, and finally vacuum-dried at 50°C to produce purified chitosan.
Step 3: Alkalization of the purified chitosan: 10 g of the purified chitosan was added to 100 mL of a 50 wt% KOH solution and allowed to stand at room temperature for 24 h.
Step 4. Hydroxybutylation of alkalized chitosan: 10 g of the alkalized chitosan was filtered through a 100-mesh silk fabric to remove the excess alkali solution and then transferred to a three-necked flask, 80 mL of isopropanol was added, and stirring was conducted for 1 h to 2 h to completely disperse chitosan. Then, 200 mL of 1,2-epoxybutane was slowly added dropwise through a separatory funnel, and a reaction was conducted at room temperature of 23°C for 4 d. After the reaction was completed, precipitation was conducted with acetone in a volume 9 times a volume of a reaction solution. A resulting precipitate was washed until a pH was 7 to 8 and vacuum-dried at 50°C to produce a white powder. The white powder was mixed with water to prepare a 5 wt% thermosensitive chitosan hydrogel, which was not sterilized. The product in this comparative example had a gelation temperature of 25°C.

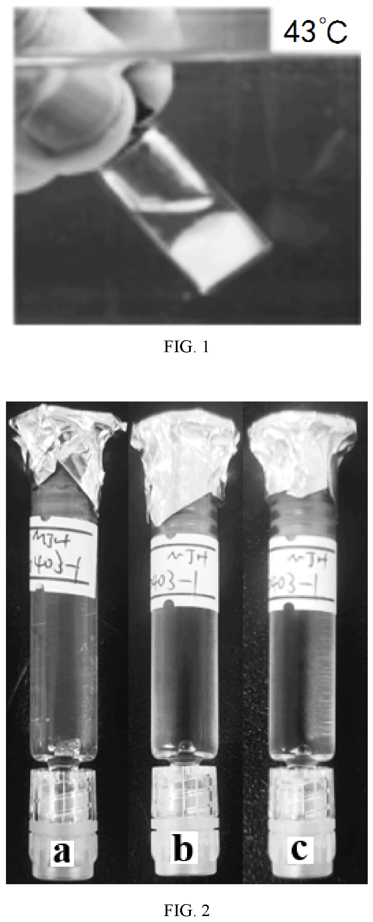

After the product of this example was subjected to high-temperature high-pressure sterilization using a pressure steam sterilizer at a pressure of 0.12 MPa and a temperature of 122°C for 15 min until a sterilization factor (F₀) was larger than or equal to 12.0, a precipitate was produced in the product, and severe phase separation occurred. After being cooled to room temperature, the product remained in a phase-separated state. The product in this comparative example was tested. It was found that the product in this comparative example experienced phase separation at a temperature of 43°C. As shown in FIG. 1, a white precipitate was produced. The phase separation indicated that the product became ineffective and non-injectable.

### Comparative Example 2

A preparation method of a thermosensitive chitosan hydrogel in this comparative example was the same as the preparation method in Example 2, except that the etherification reaction was conducted at 15°C for 12 h.

According to test results, the thermosensitive chitosan hydrogel had a total degree of substitution of 0.25, where a degree of substitution at C6 hydroxyl was 0.2, a degree of substitution at C3 hydroxyl was 0, and a degree of substitution at C2 amino was 0.05.

### Comparative Example 3

A preparation method of a thermosensitive chitosan hydrogel in this comparative example was the same as the preparation method in Example 2, except that the etherification reaction was conducted at 55°C for 80 h.

According to test results, the thermosensitive chitosan hydrogel had a total degree of substitution of 2.5, where a degree of substitution at C6 hydroxyl was 1.0, a degree of substitution at C3 hydroxyl was 0.7, and a degree of substitution at C2 amino was 0.8.

### Comparative Example 4

A preparation method of a thermosensitive chitosan hydrogel in this comparative example was the same as the preparation method in Example 1, except that an ultrasound-assisted etherification reaction was not conducted in the step (3).

According to test results, the thermosensitive chitosan hydrogel had a total degree of substitution of 0.45, where a degree of substitution at C6 hydroxyl was 0.4, a degree of substitution at C3 hydroxyl was 0, and a degree of substitution at C2 amino was 0.05.

### Comparative Example 5

A preparation method of a thermosensitive chitosan hydrogel in this comparative example was the same as the preparation method in Example 1, except that, in the step (1), the dry chitosan powder was directly used for the subsequent steps (the dry chitosan powder was not subjected to particle size refinement).

According to test results, the thermosensitive chitosan hydrogel had a total degree of substitution of 0.30, where a degree of substitution at C6 hydroxyl was 0.26, a degree of substitution at C3 hydroxyl was 0, and a degree of substitution at C2 amino was 0.04.

The hydrogels obtained in the above examples and comparative examples were each subjected to performance tests, and test results were shown in Table 1.

A percentage of each element (C, H, O, or N) in a hydrogel was detected with an elemental analyzer (Thermo Flash 2000), and a degree of substitution was then calculated based on a molecular formula. The product in Example 2 was taken as an example. A molecular formula of the product in Example 2 was as follows: [C₆H_{11-a-b}O₄N·(C₂H₃O)ₐ·(C₄H₉O)_{b}·_{C}H₂O]ₙ. A degree of substitution could be calculated according to the formula described in section 2.1 of the reference (Xiaotong Wang, Changzheng Wei, Bin Cao, Lixia Jiang, Yongtai Hou, Jiang Chang. Fabrication of Multiple-Layered Hydrogel Scaffolds with Elaborate Structure and Good Mechanical Properties via 3D Printing and Ionic Reinforcement. ACS Appl. mater. Interfaces 2018, 10, 18338-18350.). For other examples, the analysis and calculation could be performed by replacing the hydroxybutyl group in the molecular formula of the product in Example 2 with different alkylene oxide compounds.

A gelation temperature was tested by a rheometer. Specifically, 0.5 g of a cooled gel solution was fed into the rheometer, and tested using a 1° cone plate with a diameter of 35 mm in a test temperature range of 4°C to 40°C to acquire curves of changes of a storage modulus G' and a loss modulus G" as a function of temperature. The gelation temperature was defined as a temperature at which G' = G".

The biocompatibility was tested in accordance with GB/T 16886.12-2017.

**Table 1 Hydrogel properties**

| | Average degree of substitution of thermosensitive chitosan in a hydrogel | | | Gelation temperature/°C | State after pressure steam sterilization | Biocompatibility |
|---|---|---|---|---|---|---|
| | C2 amino | C3 hydroxyl | C6 hydroxyl | | | |
| Comparative Example 1 | 0.6 | 0.5 | 1.0 | 25 | Precipitation and phase separation | / |
| Example 1 | 0.1 | 0 | 0.5 | 35 | No precipitation and homogeneous phase | Very weak inflammatory response |
| Example 2 | 0.25 | 0 | 0.75 | 34 | | Very weak inflammatory response |
| Example 3 | 0.3 | 0.2 | 1.0 | 32 | | Very weak inflammatory response |
| Example 4 | 0.5 | 0.5 | 1.0 | 30 | | Very weak inflammatory response |
| Comparative Example 2 | 0.05 | 0 | 0.2 | 50 | Phase separation and no precipitation | Strong inflammatory response |
| Comparative Example 3 | 0.8 | 0.7 | 1.0 | 15 | Precipitation and phase separation | Strong inflammatory response |
| Comparative Example 4 | 0.05 | 0 | 0.4 | 38 | No precipitation and homogeneous phase | Strong inflammatory response |
| Comparative Example 5 | 0.04 | 0 | 0.26 | 48 | No precipitation and homogeneous phase | Strong inflammatory response |

(Note: The phenomenon of phase separation mentioned above is specifically as follows: There is water in a lower layer and a pale-white gelatinous substance in an upper layer.)
As shown in Table 1, by controlling a reaction to achieve a degree of substitution of 0.5 to 1.0 at C6 hydroxyl, a degree of substitution of 0 to 0.5 at C3 hydroxyl, and a degree of substitution of 0.1 to 0.5 at C2 amino in a thermosensitive chitosan hydrogel, the thermosensitive chitosan hydrogel can be imparted with a low total degree of substitution. The hydrogel product of the present disclosure has a gelation temperature of 29°C to 40°C, and remains a homogeneous liquid at a temperature lower than the gelation temperature. The hydrogel product of the present disclosure experiences no phase separation at a temperature higher than the gelation temperature and no phase separation even after high-temperature high-pressure sterilization. Moreover, after undergoing high-temperature high-pressure sterilization and returning to room temperature, the hydrogel product of the present disclosure still maintains the homogeneous liquid. The low total degree of substitution results in relatively strong hydrophilicity of polymer chains of thermosensitive chitosan and relatively weak chain entanglement of thermosensitive chitosan. Even when a temperature increases to a temperature for high-temperature sterilization, the hydrogel product of the present disclosure can remain homogeneous without phase separation that would lead to product failure. When the temperature decreases from the temperature for high-temperature sterilization to room temperature, the weak chain entanglement allows the disentanglement of chains, thereby returning to the homogeneous liquid. Details can be seen in FIG. 2. FIG. 2 shows the morphologies of the thermosensitive chitosan hydrogel prepared in Example 2 under different conditions. In FIG. 2, a shows a morphology of the thermosensitive chitosan hydrogel after high-temperature high-pressure sterilization, b shows a morphology of the thermosensitive chitosan hydrogel after being stored in a 5°C refrigerator for 7 d, and c shows a morphology of the thermosensitive chitosan hydrogel after being stored at a constant temperature of 43°C for 7 d. The thermosensitive chitosan hydrogel of Example 2 presents a homogeneous solid gel-like state after the high-temperature high-pressure sterilization, with no phase separation, and still remains homogeneous after being cooled to room temperature. The thermosensitive chitosan hydrogel remains a homogeneous liquid after being stored in the 5°C refrigerator for 7 d, and still presents a homogeneous solid gel-like state after being stored at the constant temperature of 43°C for 7 d. It can be seen that the hydrogel of the present disclosure has a wide operating temperature range and high storage stability, and exhibits excellent stability across a range from low temperature to high temperature. When the total degree of substitution of the thermosensitive chitosan hydrogel exceeds 2, the relatively high degree of substitution results in strong hydrophobic interactions among polymer chains of thermosensitive chitosan. At a relatively high temperature, such as a sterilization temperature, there will be very tight chain entanglement. As a result, when the temperature decreases to room temperature, chains cannot disentangle, resulting in precipitation and phase separation.

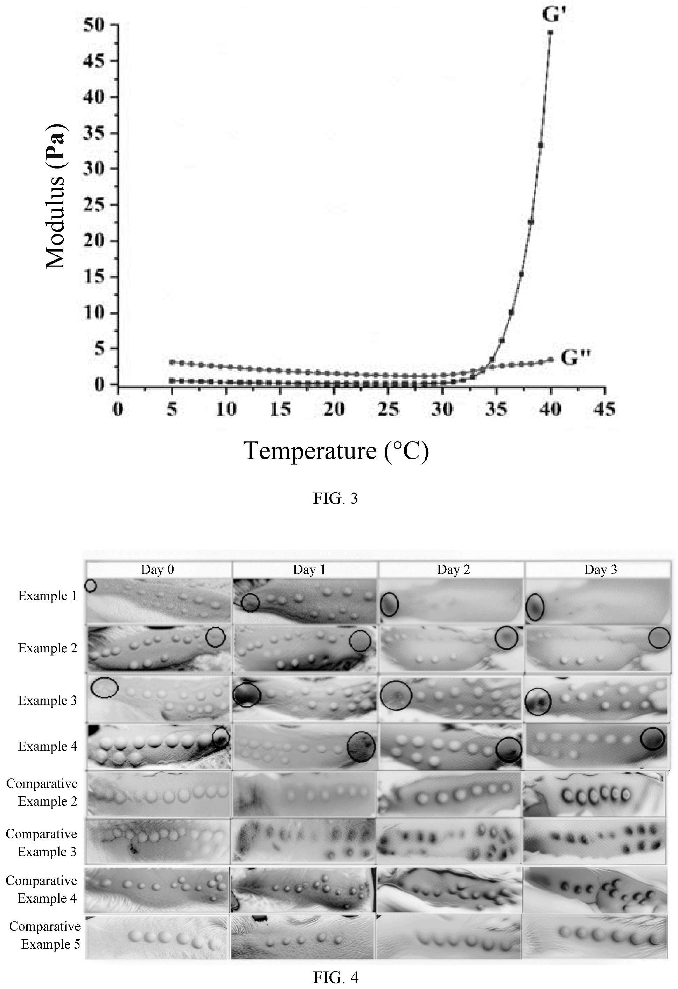

Changes in the storage modulus G' and loss modulus G" of the thermosensitive chitosan hydrogel of Example 2 as a function of temperature are shown in FIG. 3. According to FIG. 3, at a temperature lower than 34°C, G' < G", indicating that the hydrogel system remains in a liquid state. At 34°C, a gelation transition occurs (the temperature at which G' = G"), representing a transition from a liquid state to a solid gel state. At a temperature higher than 34°C, G' > G", indicating that the hydrogel system is completely transformed into a solid gel state.

The hydrogel system of the present disclosure remains a homogeneous liquid at a temperature lower than the gelation temperature, is not prone to failure after high-temperature sterilization, and does not undergo precipitation or phase separation. The product of the present disclosure exhibits excellent stability across a range from low temperature to high temperature, does not experience phase separation, and has a wide application range and a long storage time.

Biocompatibility test results of Examples 1 to 4 and Comparative Examples 2 to 5 on day 0 to day 3 after intradermal injection are shown in FIG. 4. It can be seen from Comparative Example 2 in FIG. 4 that, when the total degree of substitution of thermosensitive chitosan is too low, excessive C2 amino groups are exposed, resulting in poor biocompatibility after intradermal injection. It can be seen from Comparative Example 3 in FIG. 4 that, when the degrees of substitution at C3 hydroxyl and C2 amino are too high, there is a too strong hydrophobic interaction of the thermosensitive chitosan hydrogel, leading to poor biocompatibility and a strong inflammatory response after intradermal injection.

It can be seen from Comparative Example 4 in FIG. 4 that, in the absence of ultrasound, the reaction between the wet chitosan powder and the propylene oxide is insufficient, leading to a low total degree of substitution. Accordingly, excessive C2 amino groups are exposed, resulting in poor biocompatibility and a strong inflammatory response after intradermal injection.

In Comparative Example 5, the raw material is not subjected to refinement (the dry chitosan powder has an average particle size of more than 7 µm). Even under ultrasonic conditions, the reaction between the chitosan with a relatively large particle size and the alkylene oxide compound is insufficient, leading to a low total degree of substitution. Accordingly, excessive C2 amino groups are exposed, resulting in poor biocompatibility and a strong inflammatory response after intradermal injection.

Under appropriate degrees of substitution, where a degree of substitution at C2 amino is 0.1 to 0.5, a degree of substitution at C6 hydroxyl is 0.5 to 1.0, and a degree of substitution at C3 hydroxyl is 0 to 0.5 in thermosensitive chitosan, the products of Examples 1 to 4 do not cause any redness, swelling, or ulceration, and allow a normal color (a circled region in the figure indicates a positive control, and the positive control is an extract of a zinc diethyldithiocarbamate-containing polyurethane film, which is produced through extraction at 37°C for 72 h with an extraction ratio of 0.1 g/mL).

The above are merely preferred specific embodiments of the present disclosure, but the protection scope of the present disclosure is not limited thereto. Any equivalent replacement or modification made by a person skilled in the art according to the technical solutions of the present disclosure and the inventive concepts thereof within the technical scope of the present disclosure shall fall within the protection scope of the present disclosure.

## Claims

1. A preparation method of a single-phase thermosensitive chitosan hydrogel injectable at room temperature, comprising the following steps:
(1) grinding a dry chitosan powder to produce a fine chitosan powder with a particle size of less than or equal to 2,500 mesh,
wherein the dry chitosan powder has a degree of deacetylation of 80% or more and a weight-average molecular weight of 300,000 Daltons or more;
(2) subjecting the fine chitosan powder to alkalization, and filtering an alkalized material to produce a wet chitosan powder;
(3) subjecting the wet chitosan powder and an alkylene oxide compound to an etherification reaction for 24 h to 72 h at 27°C to 50°C under stirring and ultrasonic conditions, collecting a reaction product, and subjecting the reaction product to alcohol washing multiple times and suction filtration to produce a thermosensitive wet chitosan material; and
(4) subjecting the thermosensitive wet chitosan material to re-dissolution, dialysis, filling, and sterilization successively to produce the thermosensitive chitosan hydrogel with a total degree of substitution of 0.6 to 2, wherein a degree of substitution at C6 hydroxyl is 0.5 to 1.0, a degree of substitution at C3 hydroxyl is 0 to 0.5, and a degree of substitution at C2 amino is 0.1 to 0.5.

2. The preparation method of the single-phase thermosensitive chitosan hydrogel injectable at room temperature according to claim 1, wherein a process for preparing the dry chitosan powder is as follows: thoroughly mixing chitin with an alkaline solution, and conducting a microwave reaction; repeatedly washing a product obtained after the microwave reaction to produce a wet material; and oven-drying the wet material to produce the dry chitosan powder; and a process for preparing the fine chitosan powder is as follows: grinding the dry chitosan powder using an ultrafine powder grinder for at least 15 min until the particle size is less than or equal to 2,500 mesh.

3. The preparation method of the single-phase thermosensitive chitosan hydrogel injectable at room temperature according to claim 2, wherein the microwave reaction is conducted for 1 min to 8 min at a power of 500 W to 900 W; and the process for preparing the dry chitosan powder further comprises repeating the following steps once to 6 times: thoroughly mixing the wet material with the alkaline solution, conducting the microwave reaction, and repeatedly washing.

4. The preparation method of the single-phase thermosensitive chitosan hydrogel injectable at room temperature according to claim 2, wherein the alkaline solution is a 30 wt% to 70 wt% aqueous sodium hydroxide solution; and a mass-to-volume ratio of the chitin to the alkaline solution is 1 g : 5 mL to 1 g : 20 mL.

5. The preparation method of the single-phase thermosensitive chitosan hydrogel injectable at room temperature according to claim 2, wherein the dry chitosan powder has a degree of deacetylation of 85% to 99% and a weight-average molecular weight of 300,000 Daltons to 800,000 Daltons.

6. The preparation method of the single-phase thermosensitive chitosan hydrogel injectable at room temperature according to claim 1, wherein in the step (2), the alkalization is conducted as follows: adding the fine chitosan powder to a 30 wt% to 70 wt% aqueous potassium hydroxide solution, and standing in a water bath at 15°C to 35°C for 1 d to allow the alkalization, wherein a mass-to-volume ratio of the fine chitosan powder to the aqueous potassium hydroxide solution is 1 g : 5 mL to 1 g : 30 mL.

7. The preparation method of the single-phase thermosensitive chitosan hydrogel injectable at room temperature according to claim 1, wherein in the step (3), the alkylene oxide compound is selected from one of 1,2-epoxypropane, 1,2-epoxybutane, 1,2-epoxypentane, and 1,2-epoxyhexane.

8. The preparation method of the single-phase thermosensitive chitosan hydrogel injectable at room temperature according to claim 1, wherein in the step (3), the etherification reaction is conducted at an ultrasonic frequency of 30 kHz and an ultrasonic power of 500 W with pure water as a solvent; and a mass-to-volume ratio of the fine chitosan powder to the alkylene oxide compound is 1 g : 20 mL to 1 g : 50 mL and a mass-to-volume ratio of the fine chitosan powder to the pure water is 1 g : 1 mL to 1 : 10 mL.

9. The preparation method of the single-phase thermosensitive chitosan hydrogel injectable at room temperature according to claim 1, wherein in the step (4), the re-dissolution is conducted as follows: adding pure water to the thermosensitive wet chitosan material, and stirring for dissolution to produce a colorless and clear thermosensitive chitosan solution;
the dialysis is conducted using phosphate buffered saline (PBS) with an osmotic pressure of 250 mOsm/L to 350 mOsm/L and a pH of 7.2±0.2 for 48 h to 144 h, during which the PBS is replaced every 24 h; and
the sterilization is conducted using a pressure steam sterilizer at a pressure of 0.1 MPa to 0.15 MPa and a temperature of 121°C to 122°C for 10 min to 15 min until a sterilization factor F₀ is larger than or equal to 12.0.

10. A single-phase thermosensitive chitosan hydrogel injectable at room temperature prepared by the preparation method according to any one of claims 1 to 9, wherein a concentration of the thermosensitive chitosan hydrogel is 6 mg/mL to 20 mg/mL.
